# EUROPÄISCHE PATENTANMELDUNG

(11) **EP 4 836 282 A1**
(43) Veröffentlichungstag der Anmeldung: **04.11.2026**
(21) Anmeldenummer: 26169309.7
(22) Anmeldetag: 30.03.2026
(51) Int. Cl.: H02M 7/797, H02M 1/42, H02M 7/48, H02M 5/293, H02M 5/297

(54) **BIDIREKTIONALER, GALVANISCH TRENNENDER NETZUMRICHTER MIT RESONANTEM ISOLIERTEM FRONT-END UND NACHGESCHALTETEM, STROMEINPRÄGENDEN DC/DC STELLER**

(30) Priorität: 28.04.2025 DE 102025116345
(71) Anmelder: Volkswagen Aktiengesellschaft, 38440 Wolfsburg (DE)
(72) Erfinder: Henkenius, Dr. Carsten, 38440 Wolfsburg (DE)

(57) **Zusammenfassung**

Die Erfindung betrifft einen bidirektionalen, galvanisch trennender Netzgleichrichter (1), umfassend einen galvanisch getrennten Resonanzwandler (2), einen Leistungssteller (3) und eine Ansteuerschaltung (4) für den Resonanzwandler (2) und den Leistungssteller (3), wobei der Resonanzwandler (2) auf der netzseitigen Primärseite eine Halbbrücke aufweist, wobei der High-Side-Schalter einen ersten Leistungstransistor (MI1) und einen zweiten Leistungstransistor (MI2) aufweist, die in Reihe geschaltet sind und der Low-Side-Schalter einen ersten Leistungstransistor (MI3) und einen zweiten Leistungstransistor (MI4) aufweist, die in Reihe geschaltet sind, wobei auf der Sekundärseite eine weitere Halbbrücke angeordnet ist, die einen ersten Leistungstransistor (MO1) als High-Side-Schalter und einen zweiten Leistungstransistor (MO2) als Low-Side-Schalter aufweist, wobei die beiden Halbbrücken über eine Primärinduktivität (LP) und eine Sekundärinduktivität (SP) gekoppelt sind, wobei der Leistungssteller (3) eine Eingangsinduktivität (LE) aufweist, die mit einem Mittelabgriff einer Halbbrücke verbunden ist, die einen ersten Leistungstransistor (MP1) und einen zweiten Leistungstransistor (MP2) aufweist, wobei die Leistungstransistoren (MI1-MI4, MO1, MO2, MP1, MP2) als MOSFETs ausgebildet sind.

## Beschreibung

Die Erfindung betrifft einen bidirektionalen, galvanisch trennenden Netzgleichrichter.

Es sind On-Board-Ladegeräte bekannt, die eine Netzwechselspannung mittels einer Gleichrichterschaltung gleichrichten, wobei dann die gleichgerichtete Spannung mittels eines galvanisch getrennten DC/DC-Wandlers an eine zu ladende Batterie übertragen wird. Dabei dienen häufig Elektrolyt-Kondensatoren am Ausgang des DC/DC-Wandlers zur Glättung der Gleichspannung. Aufgrund der begrenzten Lebensdauer von Elektrolyt-Kondensatoren gibt es Bestrebungen, diese zu ersetzen.

Eine Möglichkeit hierzu ist es, auf die netzseitige vollständige Gleichrichtung zu verzichten. Dazu werden elektrische Schaltungstopologien mit galvanischer Trennung eingesetzt, welche pulsierende Ladeströme batterieseitig einstellen können. Typischerweise besitzen solche Topologien einen Netzgleichrichter mit nachgelagertem galvanisch trennenden Wandler.

Der Erfindung liegt das technische Problem zugrunde, einen bidirektionalen, galvanisch trennenden Netzgleichrichter zu schaffen, der einen pulsierenden Ladestrom für eine Batterie zur Verfügung stellt und wenig Bauelemente aufweist.

Die Lösung des technischen Problems ergibt sich durch einen bidirektionalen, galvanisch trennenden Netzgleichrichter mit den Merkmalen des Anspruchs 1. Weitere vorteilhafte Ausgestaltungen der Erfindung ergeben sich aus den Unteransprüchen.

Der bidirektionale, galvanisch trennende Netzgleichrichter weist einen galvanisch getrennten Resonanzwandler, einen Leistungssteller und eine Ansteuerschaltung für den Resonanzwandler und den Leistungssteller auf. Der galvanisch getrennte Resonanzwandler ist ungeregelt und wird mit seiner festen Resonanzfrequenz angesteuert. Der Resonanzwandler weist auf der netzseitigen Primärseite eine Halbbrücke auf, wobei der High-Side-Schalter einen ersten Leistungstransistor und einen zweiten Leistungstransistor aufweist, die in Reihe geschaltet sind. Der Low-Side-Schalter der netzseitigen Halbbrücke weist ebenfalls einen ersten Leistungstransistor und einen zweiten Leistungstransistor auf, die in Reihe geschaltet sind. Auf der Sekundärseite ist eine weitere Halbbrücke angeordnet, die einen ersten Leistungstransistor als High-Side-Schalter und einen zweiten Leistungstransistor als Low-Side-Schalter aufweist. Die beiden Halbbrücken sind über eine Primärinduktivität und eine Sekundärinduktivität gekoppelt. Weiter weist der Resonanzwandler auf der Sekundärseite mindestens eine Resonanzinduktivität und mindestens eine Resonanzkapazität auf, die beispielsweise in Reihe zur Sekundärinduktivität geschaltet sind. Der Leistungssteller weist eine Eingangsinduktivität auf, die mit einem Mittelabgriff einer Halbbrücke verbunden ist, die einen ersten Leistungstransistor und einen zweiten Leistungstransistor aufweist, wobei die Leistungstransistoren des Resonanzwandlers und des Leistungsstellers als MOSFETs ausgebildet sind. Dabei wird der Gleichrichter vollständig in den Resonanzwandler integriert, der beim Laden aus dem Netz eine pulsierende Gleichspannung zur Verfügung stellt, wobei dann der Leistungssteller die geforderte Ladeleistung einstellt.

In einer Ausführungsform ist die die Ansteuerschaltung derart ausgebildet, einen Spannungswert einer speisenden Wechselspannung zu ermitteln und mit mindestens einem Schwellwert zu vergleichen, wobei bei einem Betrag des Spannungswertes kleiner dem Schwellwert die Leistungstransistoren nicht angesteuert werden. Dabei wird ausgenutzt, dass die Bodydioden der MOSFETs auf der Primär- und der Sekundärseite wie ein passiver Gleichrichter verschaltet sind. Da bei sehr kleinen Spannungen der Wirkungsgrad relativ schlecht ist (der Resonanzwandler wird typischerweise im kHz-Bereich getaktet), wird bei kleinen Spannungen auf eine aktive Gleichrichtung verzichtet. Der Schwellwert für die positive Spannung kann beispielsweise bei +0,5 V und der Schwellwert für die negative Spannung kann bei -0,5 V liegen. In dem Fall fällt zwar die ganze Spannung über den Bodydioden ab, aber insgesamt ist dies energetisch besser, als wenn die Leistungstransistoren aktiv angesteuert werden würden.

In einer weiteren Ausführungsform ist die Ansteuerschaltung derart ausgebildet, dass beim Laden aus dem Netz das Vorzeichen der Netzspannung ermittelt wird, wobei bei einer positiven Netzspannung der zweite Leistungstransistor des High-Side-Schalters und der zweite Leistungstransistor des Low-Side-Schalters der netzseitigen Halbbrücke permanent durchgeschaltet werden, wobei der erste Leistungstransistor des High-Side-Schalters der netzseitigen Halbbrücke synchron mit dem Leistungstransistor des High-Side-Schalters auf der Sekundärseite angesteuert wird und der erste Leistungstransistor des Low-Side-Schalters der netzseitigen Halbbrücke synchron mit dem Leistungstransistor des Low-Side-Schalters auf der Sekundärseite angesteuert wird. Entsprechend wird bei einer negativen Netzspannung der erste Leistungstransistor des High-Side-Schalters und der erste Leistungstransistor des Low-Side-Schalters permanent durchgeschaltet, wobei der zweite Leistungstransistor des High-Side-Schalters der netzseitigen Halbbrücke synchron mit dem Leistungstransistor des Low-Side-Schalters auf der Sekundärseite angesteuert wird und der zweite Leistungstransistor des Low-Side-Schalters der netzseitigen Halbbrücke synchron mit dem Leistungstransistor des High-Side-Schalters auf der Sekundärseite angesteuert wird. Dabei sind die Pulsmuster zur Ansteuerung derart ausgebildet, dass eine Totzeit eingestellt wird, in der alle vier getakteten angesteuerten Leistungstransistoren gesperrt sind, um so beim Wechsel sicher zu verhindern, dass sich ein Kurzschluss einstellt. Beim Laden aus der Batterie ins Netz bzw. zur Versorgung einer Wechselspannungs-Steckdose erfolgt die Ansteuerung analog.

In einer weiteren Ausführungsform ist die Ansteuerschaltung derart ausgebildet, dass beim Laden aus dem Netz die Taktsignale für die Leistungstransistoren in der netzseitigen Halbbrücke leicht vorauseilend gegenüber den Taktsignalen auf der Sekundärseite sind (z.B. wenige ns), sodass sichergestellt ist, dass auf der Sekundärseite erst geschaltet wird, wenn die Primärseite eine Spannung gestellt hat. Beim Laden aus der Batterie in das Netz bzw. eine Wechselspannungs-Steckdose werden entsprechend die Leistungstransistoren auf der Sekundärseite vorauseilend angesteuert.

In einer weiteren Ausführungsform ist die Ansteuerschaltung derart ausgebildet, eine Ladeleistung durch einen Strom in der Eingangsinduktivität einzustellen. Die Eingangsinduktivität drosselt dabei auch hochfrequente Anteile aufgrund des Resonanzwandlers.

In einer weiteren Ausführungsform ist die Ansteuerschaltung derart ausgebildet, dass der Schwellwertvergleich eine Hysteresefunktionalität aufweist.

Die Erfindung wird nachfolgend anhand bevorzugter Ausführungsbeispiele näher erläutert. Die Figuren zeigen:
- Fig. 1: eine schematische Schaltungsanordnung eines bidirektionalen, galvanisch trennenden Netzgleichrichters,
- Fig. 2: ein schematisches Blockschaltbild einer Ansteuerschaltung,
- Fig. 3: beispielhafte Signalverlaufe an einer Primärseite des Resonanzwandlers,
- Fig. 4: beispielhafte Signalverläufe an einer Sekundärseite des Resonanzwandlers,
- Fig. 5: beispielhafte Strom- und Spannungsverläufe,
- Fig. 6: eine Darstellung von Signalverläufen der Taktsignale und
- Fig. 7: ein alternatives Blockschaltbild einer Ansteuerschaltung.

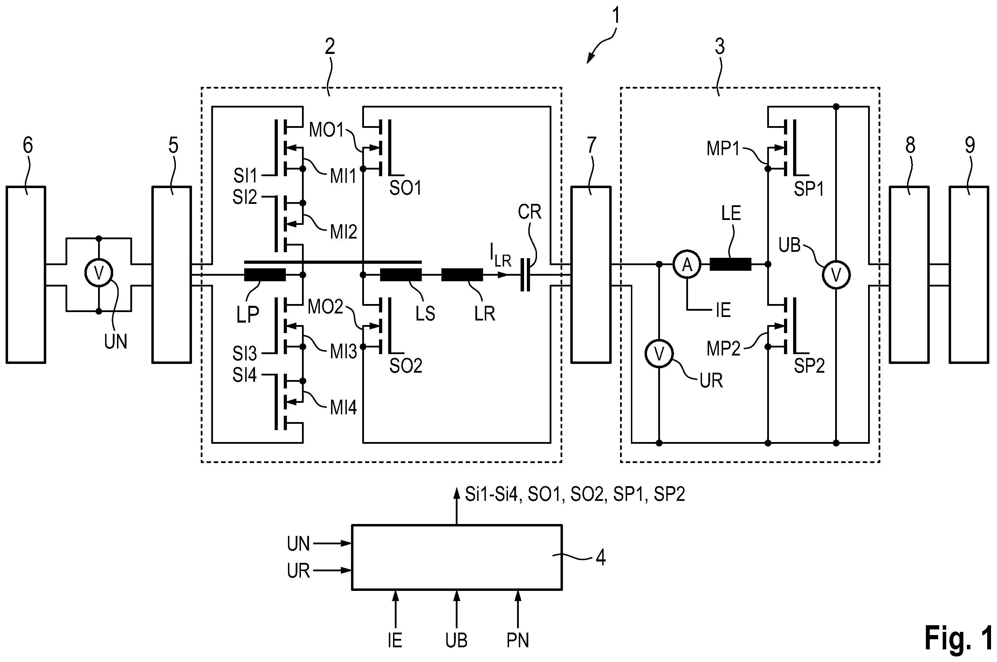

In der Fig. 1 ist ein bidirektionaler, galvanisch trennender Netzgleichrichter 1 dargestellt, der einen galvanisch getrennten Resonanzwandler 2, einen Leistungssteller 3 und eine Ansteuerschaltung 4 für den Resonanzwandler 2 und den Leistungssteller 3 aufweist. Der Resonanzwandler 2 weist auf der netzseitigen Primärseite eine Halbbrücke auf, wobei der High-Side-Schalter einen ersten Leistungstransistor MI1 und einen zweiten Leistungstransistor MI2 aufweist, die in Reihe geschaltet sind, wobei der zweite Leistungstransistor MI2 mit dem Mittelabgriff der Halbbrücke verbunden ist. Der Low-Side-Schalter weist einen ersten Leistungstransistor MI3 und einen zweiten Leistungstransistor MI4 auf, die ebenfalls in Reihe geschaltet sind, wobei der erste Leistungstransistor MI3 mit dem Mittelabgriff verbunden ist. An dem Mittelabgriff ist eine Primärinduktivität LP angeordnet. Auf einer Sekundärseite weist der Resonanzwandler 2 eine weitere Halbbrücke auf, die einem ersten Leistungstransistor MO1 als High-Side-Schalter und einem zweiten Leistungstransistor MO2 als Low-Side-Schalter aufweist. Am Mittelabgriff ist eine Sekundärinduktivität LS angeordnet, zu der in Reihe eine Resonanzinduktivität LR und eine Resonanzkapazität CR angeordnet sind. Die netzseitige Halbbrücke ist über einen EMV-Filter 5 mit einem Wechselspannungsladeanschluss 6 verbunden (der im Entladefall auch als Wechselspannungssteckdose ausgebildet sein kann). Die Sekundärseite des Resonanzwandlers 2 ist über einen weiteren EMV-Filter 7 mit dem Leistungssteller 3 verbunden. Der Leistungssteller 3 weist eine weitere Halbbrücke mit einem ersten Leistungstransistor MP1 als High-Side-Schalter und einem zweiten Leistungstransistor MP2 als Low-Side-Schalter auf. Am Mittelabgriff ist eine Eingangsinduktivität LE angeordnet, deren Strom IE durch eine Strommesseinrichtung gemessen wird. Des Weiteren wird über eine Spannungsmesseinrichtung die Spannung UR am Eingang des Leistungsstellers 3 gemessen. Ausgangsseitig ist der Leistungssteller 3 über einen weiteren EMV-Filter 8 mit einer Hochvoltbatterie 9 verbunden, wobei über eine weitere Spannungsmesseinrichtung ausgangsseitig die Spannung UB der Hochvoltbatterie 9 gemessen wird. Schließlich wird über eine weitere Spannungsmesseinrichtung die Netzspannung UN gemessen. Die Leistungstransistoren MI1-MI4, MO1, MO2, MP1, MP2 sind als MOSFETs mit integrierter Bodydiode ausgebildet. Die Ansteuerschaltung 4 liefert die Steuersignale SI1-SI4, SO1, SO2, SP1, SP2 für alle Leistungstransistoren. Der Resonanzwandler 2 ist ungeregelt, d.h. die Leistungstransistoren des Resonanzwandlers 2 werden mit einer festen, der Resonanzfrequenz entsprechenden Frequenz angesteuert. Im Ladebetrieb aus dem Netz ist dann die Ansteuerung der Leistungstransistoren MI1-MI4 bzw. MO1, MO2 abhängig von den Vorzeichen der aktuell anliegenden Netzspannung. Bei einer positiven Netzspannung werden MI2 und MI4 permanent durchgeschaltet und MI1 und MO1 gemeinsam getaktet, wobei MI1 um einen zeitlichen Versatz Δt leicht vorauseilend angesteuert wird. Ebenso werden MI3 und MO2 gemeinsam getaktet, wobei MI3 leicht vorauseilend angesteuert wird. Die Takte für MI1 und MI3 sind gegensinnig, wobei zusätzlich eine Totzeit vorgesehen ist, wo beide gesperrt sind, um einen Kurzschluss sicher zu vermeiden. Am Ausgang des Resonanzwandlers 2 liegt dann eine pulsierende Gleichspannung an, die dann vom Leistungssteller 3 zum Laden der Hochvoltbatterie 9 genutzt wird. In umgekehrter Laderichtung (also dem Laden aus der Hochvoltbatterie 9 in das Netz) müssen entsprechend die Leistungstransistoren MO1, MO2 vorauseilend angesteuert werden. Des Weiteren werden die Leistungstransistoren MI1-MI4, MO1, MO2 nur angesteuert, wenn der Betrag der speisenden Spannung größer mindestens einem Schwellwert ist.

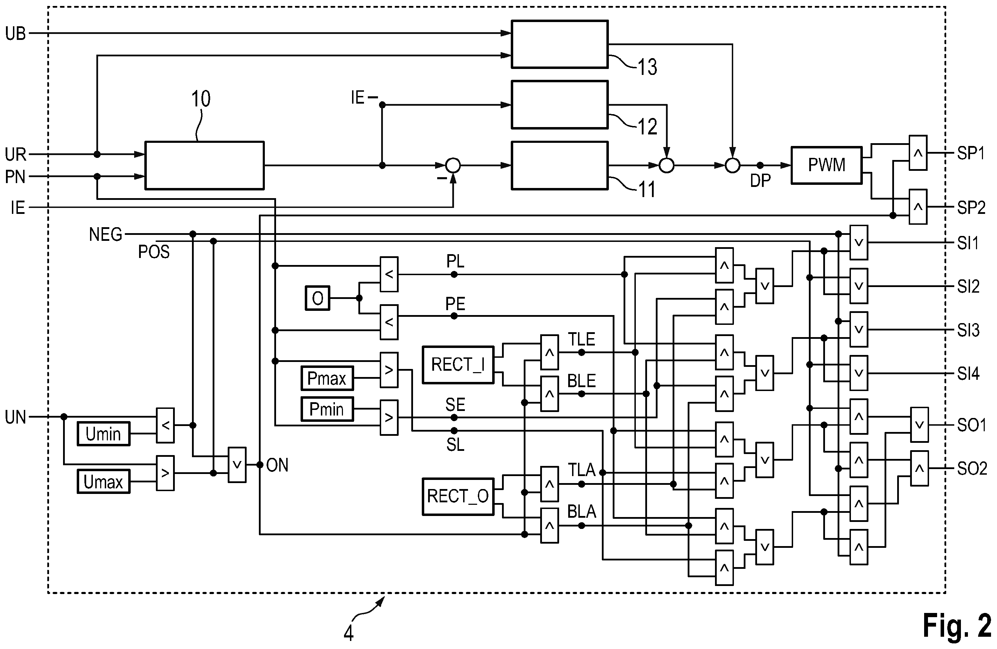

Anhand der Fig. 2 soll nun der Aufbau der Ansteuerschaltung 4 näher erläutert werden. Die Eingangsgrößen sind die Spannungen UB, UR, UN sowie der Strom IE (siehe auch Fig. 1), wobei zusätzlich eine gewünschte Ladeleistung PN vorgegeben wird, wobei PN je nach Laderichtung ein positives oder ein negatives Vorzeichen hat. Die Netzspannung UN wird mit einem unteren Schwellwert Uₘᵢₙ und einem oberen Schwellwert Uₘₐₓ verglichen. Uₘᵢₙ ist beispielsweise -0,5 V und Uₘₐₓ ist beispielsweise +0,5 V. Dabei wird ein Freigabesignal ON nur erzeugt, wenn die Netzspannung UN größer als +0,5 V oder kleiner -0,5 V ist. Ist ON null, werden keine Steuersignale SP1, SP2, SI1-SI4, SO1, SO2 ausgegeben und die Schaltung arbeitet rein passiv. Des Weiteren wird das Vorzeichen NEG oder POS der Netzspannung UN ermittelt. Aus der Nennleistung PN und der Eingangsspannung UR am Leistungssteller 3 ermittelt eine Leistungsfaktorkorrektur-Einheit 10 einen Soll-Eingangsstrom IE_, der durch die Eingangsinduktivität LE fließen soll. Dieser Soll-Eingangsstrom IE_ wird mit dem Ist-Eingangsstrom IE verglichen und die Differenz einem Stromregler 11 zugeführt. Der Soll-Eingangsstrom IE_ wird zusätzlich einer Vorsteuerung 12 zugeführt. Die Spannungen UR und UB werden einer Störgrößenaufschaltung 13 zugeführt. Aus den Ausgangsgrößen von Stromregler 11, Vorsteuerung 12 und Störgrößenaufschaltung 13 wird dann ein Duty-Cycle DP (Tastverhältnis) ermittelt und mittels einer PWM-Einheit in PWM-Steuersignale SP1, SP2 für die Leistungstransistoren MP1, MP2 des Leistungsstellers 3 umgerechnet. Eine Einheit RECT_I erzeugt die Taktsignale TLE und BLE für die Leistungstransistoren MI1-MI4. Eine Einheit RECT_O erzeugt die Taktsignale TLA, BLA für die Leistungstransistoren MO1, MO2. Eingang und Ausgang wechseln dabei abhängig vom Vorzeichen von PN, also ob PL logisch 1 oder PE logisch 1 ist.

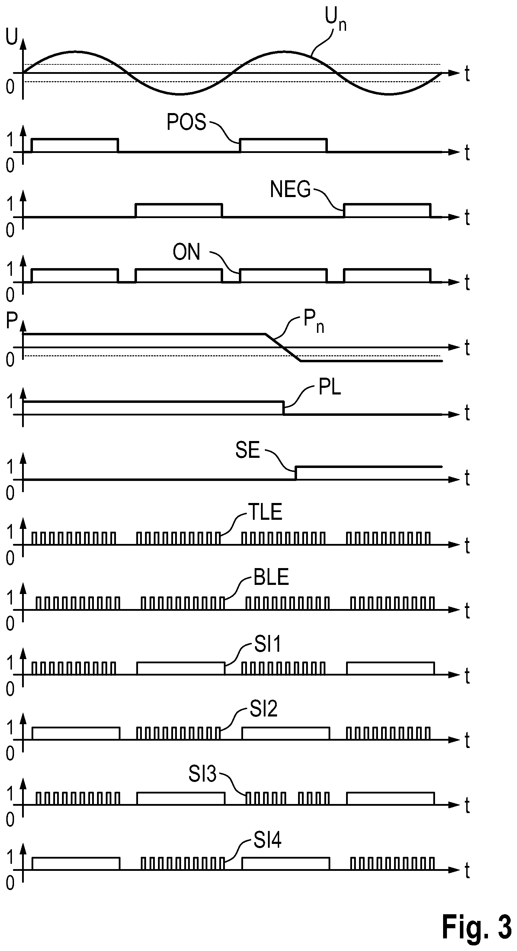

In der Fig. 3 sind beispielhafte Signalverläufe auf der netzseitigen Seite des Resonanzwandlers 2 dargestellt, wobei auch ein Vorzeichenwechsel von PN dargestellt ist. Solange PL 1 ist, stellt die netzseitige Halbbrücke den Eingang dar, ist also die Primärseite beim Laden. Anschließend mit PN<O ist die netzseitige Halbbrücke die Sekundärseite beim Entladen, also SE=1. TLE und BLE sind dabei zueinander versetzt.

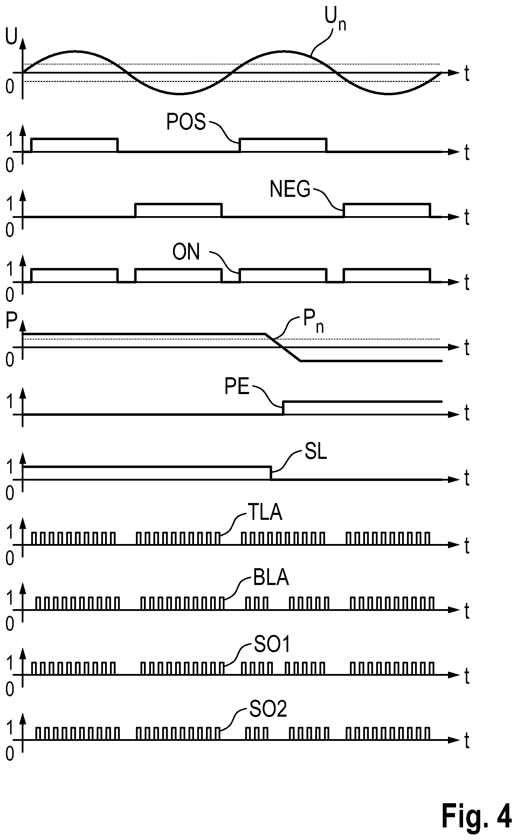

In der Fig. 4 sind die dazugehörigen Signalverläufe für die leistungsstellerseitige Halbbrücke des Resonanzwandlers 2 dargestellt.

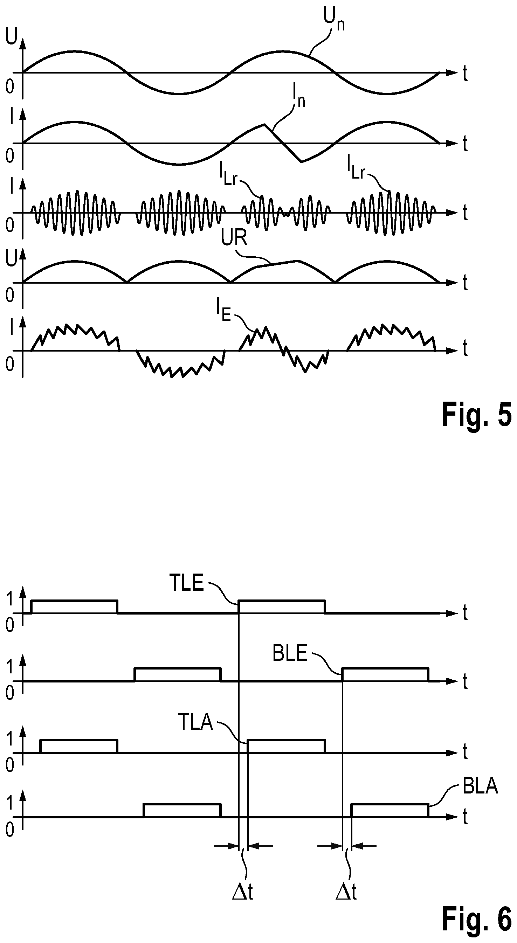

In der Fig. 5 sind die dazugehörigen Spannungs- und Stromsignale für UN, IN (Netzstrom), I_{LR}, UR und IE dargestellt.

In der Fig. 6 ist die zeitlich vorauseilende Ansteuerung um den Versatz Δt dargestellt, d.h. die Leistungstransistoren auf der Eingangsseite werden um Δt früher angesteuert als die Leistungstransistoren auf der Ausgangsseite.

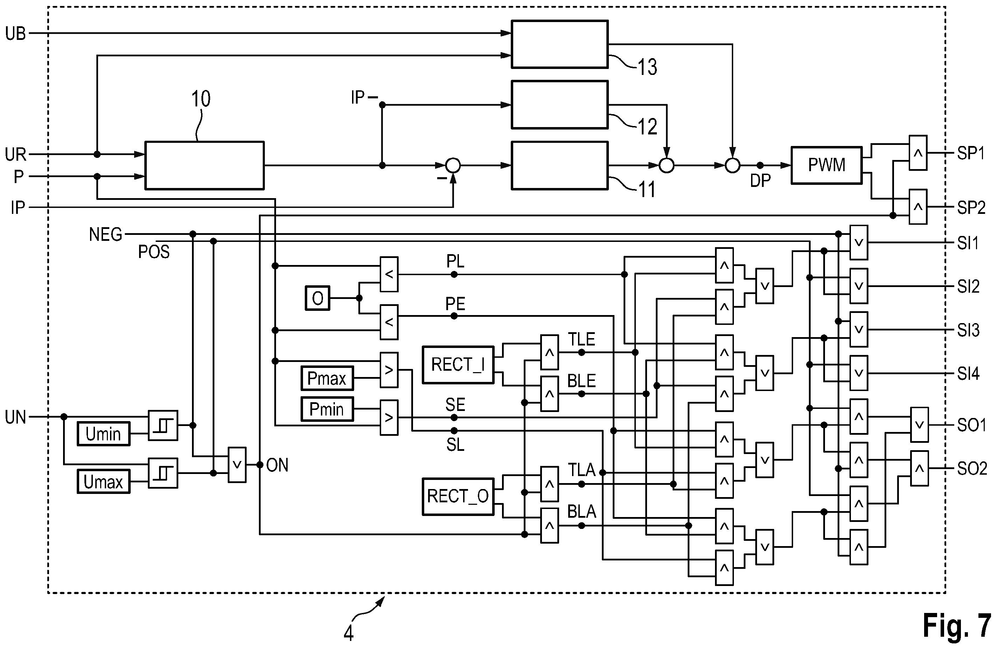

In der Fig. 7 ist eine weitere Ausführungsform für die Ansteuerschaltung 4 dargestellt, wobei der einzige Unterschied ist, dass der Schwellwertvergleich der Netzspannung eine Hysteresefunktionalität aufweist, um bei Netzspannungsschwankungen ein Toggeln zwischen aktivem und passivem Betrieb zu vermeiden.

### Bezugszeichenliste

- 1: Netzgleichrichter
- 2: Resonanzwandler
- 3: Leistungssteller
- 4: Ansteuerschaltung
- 5: EMV-Filter
- 6: Wechselspannungsladeanschluss
- 7: EMV-Filter
- 8: EMV-Filter
- 9: Hochvoltbatterie
- 10: Leistungsfaktorkorrektur-Einheit
- 11: Stromregler
- 12: Vorsteuerung
- 13: Störgrößenaufschaltung
- BLA: Taktsignal
- IE: Ist-Eingangsstrom
- IE_: Soll-Eingangsstrom
- IN: Netzstrom
- LE: Eingangsinduktivität
- LP: Primärinduktivität
- MI1-MI4: Leistungstransistoren
- MO1, MO2: Leistungstransistoren
- MP1, MP2: Leistungstransistoren
- NEG: Vorzeichen der Netzspannung
- ON: Freigabesignal
- PN: Ladeleistung
- POS: Vorzeichen der Netzspannung
- SI1-SI4: Steuersignale
- SO1, SO2: Steuersignale
- SP1, SP2: Steuersignale
- SP: Sekundärinduktivität
- TLA: Taktsignal
- Uₘᵢₙ, Uₘₐₓ: Schwellwerte
- UB: Spannung
- UN: Netzspannung
- UR: Eingangsspannung
- Δt: zeitlicher Versatz

## Patentansprüche

1. Bidirektionaler, galvanisch trennender Netzgleichrichter (1), umfassend einen galvanisch getrennten Resonanzwandler (2), einen Leistungssteller (3) und eine Ansteuerschaltung (4) für den Resonanzwandler (2) und den Leistungssteller (3), wobei der Resonanzwandler (2) auf der netzseitigen Primärseite eine Halbbrücke aufweist, wobei der High-Side-Schalter einen ersten Leistungstransistor (MI1) und einen zweiten Leistungstransistor (MI2) aufweist, die in Reihe geschaltet sind und der Low-Side-Schalter einen ersten Leistungstransistor (MI3) und einen zweiten Leistungstransistor (MI4) aufweist, die in Reihe geschaltet sind, wobei auf der Sekundärseite eine weitere Halbbrücke angeordnet ist, die einen ersten Leistungstransistor (MO1) als High-Side-Schalter und einen zweiten Leistungstransistor (MO2) als Low-Side-Schalter aufweist, wobei die beiden Halbbrücken über eine Primärinduktivität (LP) und eine Sekundärinduktivität (SP) gekoppelt sind, wobei der Leistungssteller (3) eine Eingangsinduktivität (LE) aufweist, die mit einem Mittelabgriff einer Halbbrücke verbunden ist, die einen ersten Leistungstransistor (MP1) und einen zweiten Leistungstransistor (MP2) aufweist, wobei die Leistungstransistoren (MI1-MI4, MO1, MO2, MP1, MP2) als MOSFETs ausgebildet sind.

2. Bidirektionaler, galvanisch getrennter Netzgleichrichter (1) nach Anspruch 1, **dadurch gekennzeichnet, dass** die Ansteuerschaltung (4) derart ausgebildet ist, einen Spannungswert einer speisenden Wechselspannung zu ermitteln und mit mindestens einem Schwellwert (Uₘᵢₙ, Uₘₐₓ) zu vergleichen, wobei bei einem Betrag des Spannungswertes kleiner dem Schwellwert (Uₘᵢₙ, Uₘₐₓ) die Leistungstransistoren nicht angesteuert werden.

3. Bidirektionaler, galvanisch getrennter Netzgleichrichter (1) nach einem der vorangegangenen Ansprüche, **dadurch gekennzeichnet, dass** die Ansteuerschaltung (4) derart ausgebildet ist, dass beim Laden aus dem Netz das Vorzeichen (POS, NEG) der Netzspannung (UN) ermittelt wird, wobei bei einer positiven Netzspannung (UN) der zweite Leistungstransistor (MI2) des Low-Side-Schalters der netzseitigen Halbbrücke permanent durchgeschaltet werden, wobei der erste Leistungstransistor (MI1) des High-Side-Schalters der netzseitigen Halbbrücke synchron mit dem Leistungstransistor (MO1) des High-Side-Schalters auf der Sekundärseite angesteuert wird und der erste Leistungstransistor (MI3) des Low-Side-Schalters der netzseitigen Halbbrücke synchron mit dem Leistungstransistor (MO2) des Low-Side-Schalters auf der Sekundärseite angesteuert wird, wobei bei einer negativen Netzspannung (UV) der erste Leistungstransistor (MI1) des High-Side-Schalters und der erste Leistungstransistor (MI3) des Low-Side-Schalters permanent durchgeschaltet sind, wobei der zweite Leistungstransistor (MI2) des High-Side-Schalters der netzseitigen Halbbrücke synchron mit dem Leistungstransistor (MO2) des Low-Side-Schalters auf der Sekundärseite angesteuert wird und der zweite Leistungstransistor (MI4) des Low-Side-Schalters der netzseitigen Halbbrücke synchron mit dem Leistungstransistor (MO1) des High-Side-Schalters auf der Sekundärseite angesteuert wird.

4. Bidirektionaler, galvanisch getrennter Netzgleichrichter (1) nach Anspruch 3, **dadurch gekennzeichnet, dass** die Ansteuerschaltung (4) derart ausgebildet ist, dass die Taktsignale für die Leistungstransistoren (MI1-MI4) in der netzseitigen Halbbrücke leicht vorauseilend gegenüber den Taktsignalen auf der Sekundärseite sind.

5. Bidirektionaler, galvanisch getrennter Netzgleichrichter (1) nach einem der vorangegangenen Ansprüche, **dadurch gekennzeichnet, dass** die Ansteuerschaltung (4) derart ausgebildet ist, dass beim Einspeisen in das Netz die Leistungstransistoren (MO1, MO2) auf der Sekundärseite leicht vorauseilend gegenüber den synchron angesteuerten Leistungstransistoren (MI1-MI4) der netzseitigen Halbbrücke angesteuert werden.

6. Bidirektionaler, galvanisch getrennter Netzgleichrichter (1) nach einem der vorangegangenen Ansprüche, **dadurch gekennzeichnet, dass** die Ansteuerschaltung (4) derart ausgebildet ist, eine Ladeleistung (PN) durch einen Strom (IE) in der Eingangsinduktivität (LE) einzustellen.

7. Bidirektionaler, galvanisch getrennter Netzgleichrichter (1) nach einem der Ansprüche 2 bis 6, **dadurch gekennzeichnet, dass** die Ansteuerschaltung (4) derart ausgebildet ist, dass der Schwellwertvergleich eine Hysteresefunktionalität aufweist.
